# FASCICULE DE BREVET EUROPEEN

(11) **EP 0 964 030 B1**
(45) Date de publication et mention de la délivrance du brevet: **12.09.2001**
(21) Numéro de dépôt: 99401365.4
(22) Date de dépôt: 07.06.1999
(51) Int. Cl.: C08L 23/16, C08K 5/098

(54) **Composition d'élastomère à base d'EPDM et courroie de transmission de puissance réalisée essentiellement en cet élastomére**
Elastomerzusammensetzung auf Basis von EPDM und ausschliesslich daraus bestehender Hochleistungskeilriemen
Elastomer composition based on EPDM and high performance transmission belt containing it

(30) Priorité: 11.06.1998 FR 9807346
(43) Date de publication de la demande: 15.12.1999
(73) Titulaire: HUTCHINSON, 75008 Paris (FR)
(72) Inventeur: Georget, Pierre, 37170 Chambray les Tours (FR); Morcel, Julie, 37540 Saint Cyr sur Loire (FR)
(74) Mandataire: Doireau, Marc

(56) Documents cités:
- US-A- 4 192 790
- US-A- 5 352 739
- US-A- 5 610 217

## Description

L'invention concerne une composition d'élastomère à base d'EPDM, ainsi qu'une courroie de transmission de puissance réalisée en élastomère ayant cette composition.

On a déjà proposé à plusieurs reprises d'utiliser des élastomères à base d'EPDM, à réticulation par des peroxydes organiques, pour la fabrication des courroies de transmission de puissance en raison des qualités et avantages de ces élastomères tels que leur coût, leur gamme de températures de fonctionnement et leur résistance à l'oxygène et à l'ozone, ces élastomères à base d'EPDM comprenant des additifs qui améliorent leurs propriétés dynamiques telles que leur résistance en fatigue et à l'usure, leur résistance à la rupture et leur module d'élasticité, ainsi que leur adhérence à des câblés ou cordes de traction, et qui sont en général constitués de sels métalliques d'acides organiques α,β-insaturés (notamment du méthacrylate de zinc) et de charges de renforcement telles que du noir de carbone et éventuellement des fibres, par exemple d'aramide. Une telle composition d'élastomère est par exemple décrite dans US 5 610 217.

L'invention a notamment pour but d'améliorer encore les propriétés dynamiques des élastomères à base d'EPDM, en particulier en vue de leur utilisation pour la fabrication de courroies de transmission de puissance.

Elle propose, à cet effet, une composition d'élastomère à réticulation par des peroxydes organiques, comprenant essentiellement, avant réticulation, un EPDM, au moins une charge telle par exemple que du noir de carbone et un sel métallique d'un acide organique α,β-insaturé, caractérisée en ce qu'elle comprend un autre additif réagissant avec le sel métallique précité pour renforcer la réticulation de l'élastomère, cet autre additif étant formé essentiellement d'un élastomère greffé à l'anhydride maléique.

De façon inattendue, l'élastomère greffé à l'anhydride maléique réagit avec le sel métallique de l'acide organique α,β-insaturé pour renforcer la réticulation de l'élastomère à base d'EPDM et améliorer ses caractéristiques dynamiques telles notamment que son module d'élasticité, sa résistance à la rupture et sa dureté.

De façon générale, la composition selon l'invention peut comprendre de 2 à 30 parts en poids environ de cet autre additif et de 2 à 50 parts en poids environ du sel métallique précité pour 100 parts en poids d'EPDM.

Dans un mode de réalisation préféré de l'invention, cette composition comprend environ de 3 à 5 parts en poids de cet autre additif et de 15 à 25 parts en poids environ de sel métallique précité pour 100 parts en poids d'EPDM, le sel métallique est du méthacrylate de zinc, en particulier du mono-méthacrylate de zinc, et l'élastomère greffé à l'anhydride maléique est choisi parmi le polybutadiène, le polyisoprène, le polypropylène et un copolymère éthylène-acétate de vinyle (EVA).

Par ailleurs, on peut utiliser dans la composition selon l'invention, un élastomère comprenant uniquement un EPDM ou bien un élastomère qui est un coupage d'un EPDM et d'un autre élastomère tel qu'un caoutchouc nitrile hydrogéné pour améliorer la résistance aux huiles et aux solvants (ou éventuellement un caoutchouc nitrile qui est moins cher que le caoutchouc nitrile hydrogéné), et/ou un polybutadiène pour améliorer les propriétés dynamiques et la résistance à l'usure, ou encore un caoutchouc naturel pour améliorer le collant à cru ou un polyéthylène chlorosulfoné avec groupements alkyles.

L'invention propose également une courroie de transmission de puissance, caractérisée en ce qu'elle est réalisée essentiellement en un élastomère ayant la composition définie ci-dessus.

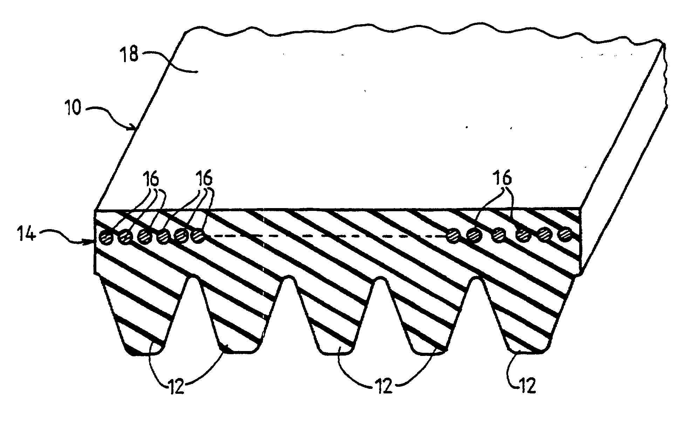

L'invention sera mieux comprise et d'autres caractéristiques, détails et avantages de celle-ci apparaîtront plus clairement à la lecture de la description qui suit, faite en référence au dessin annexé qui est une vue schématique partielle en coupe et en perspective d'une courroie selon l'invention.

Cette courroie 10, destinée à l'entraînement en rotation d'un organe tournant quelconque, est du type "POLY-V" et comprend sur sa surface interne un certain nombre de nervures circonférentielles 12 ayant une forme trapézoïdale en section transversale, ces nervures 12 étant parallèles entre elles et s'étendant sur toute la longueur de la courroie, et étant destinées à être engagées dans des gorges ou rainures de forme correspondante des poulies sur lesquelles la courroie 10 est montée.

Cette courroie comprend au moins une nappe 14 de câblés ou de cordes de traction 16 qui sont noyés dans l'élastomère de la courroie, entre la surface supérieure 18 de celle-ci et les nervures 12, les câblés 16 étant enroulés en spirale à l'intérieur de la courroie et leur nombre de spires étant fonction des caractéristiques mécaniques souhaitées de la courroie.

Selon l'invention, la courroie 10 est fabriquée en un élastomère à base d'EPDM dont la réticulation a été renforcée et dont les caractéristiques dynamiques sont nettement améliorées grâce à une synergie entre un sel métallique d'un acide organique α,β-insaturé (en particulier du méthacrylate de zinc) et un élastomère greffé à l'anhydride maléique (en particulier un polybutadiène). Typiquement, l'élastomère selon l'invention a la composition suivante, avant réticulation :
- EPDM : 100 parts en poids
- monométhacrylate de zinc : 2-50 parts en poids
- noir de carbone : 10-100 parts en poids
- agent de dispersion du noir de carbone : 1-10 parts en poids
- polybutadiène greffé à l'anhydride maléique : 2-20 parts en poids
- antioxydant : 0,5-8 parts en poids
- peroxyde organique : 0,5-8 parts en poids
- coagent de réticulation : 0,5-5 parts en poids
- plastifiant : 1-20 parts en poids.

De préférence, la composition de l'élastomère est la suivante :
- EPDM : 100 parts en poids
- monométhacrylate de zinc : 20-25 parts en poids
- noir de carbone : 50-60 parts en poids
- agent de dispersion du noir de carbone : 3-4 parts en poids
- polybutadiène greffé à l'anhydride maléique : 3-5 parts en poids
- antioxydant : 1,5-3 parts en poids
- peroxyde organique : 2-4 parts en poids
- coagent de réticulation : 1-3 parts en poids
- plastificant : 1-10 parts en poids.

La composition d'élastomère selon l'invention peut également comprendre :
- un caoutchouc nitrile hydrogéné (HNBR) dans une quantité de 2-20 parts en poids environ pour améliorer la résistance aux huiles et aux solvants ou du caoutchouc nitrile (NBR) dans les mêmes quantités et le même but que ci-dessus,
- du polybutadiène (BR) dans une quantité de 2-20 parts en poids environ pour améliorer les propriétés dynamiques et la résistance à l'abrasion,
- un polyéthylène chlorosulfoné avec groupements alkyles (ACSM) dans une quantité de 2-40 parts en poids environ pour augmenter la résistance aux huiles et la résistance au déchirement,
- du caoutchouc naturel dans une quantité de 2-20 parts en poids environ pour améliorer le collant à cru,
la composition selon l'invention comprenant alors de 98 à 80 parts en poids d'EPDM.

De plus, elle peut aussi comprendre des fibres de polyamide, aramide, polyester, rayonne, coton ou verre, dans une quantité de 3-30 parts en poids environ pour améliorer la rigidité transversale de la courroie fabriquée avec cette composition d'élastomère.

En pratique, le sel métallique tel que le méthacrylate de zinc et l'élastomère tel que le polybutadiène greffé à l'anhydride maléique utilisés dans cette composition sont ajoutés à l'EPDM sous forme de poudres, par exemple sur support silice, pour plus de commodité.

L'élastomère selon l'invention a des caractéristiques dynamiques notablement supérieures à celles des élastomères connus à base d'EPDM comprenant, avant réticulation, un sel métallique du type précité, mais dépourvus d'un élastomère greffé à l'anhydride maléique destiné à réagir avec le sel métallique.

Des essais réalisés sur des élastomères selon l'invention ont notamment permis de constater que, pour des échantillons donnés ne différant les uns les autres que par les quantités de méthacrylate de zinc et de polybutadiène greffé à l'anhydride maléique :
- la résistance à la rupture passe de 17 à 20 Mpa environ quand la quantité de polybutadiène greffé passe de 1 à 4 parts en poids, et sa valeur maximale dépend peu de la quantité de méthacrylate de zinc,
- l'allongement à la rupture passe de 300% à 600% environ quand la quantité de polybutadiène greffé passe de 1 à 8 parts en poids environ, et diminue quand la quantité de méthacrylate de zinc augmente,
- la résistance au déchirement (résistance à la propagation d'une entaille) passe de 32 à 40 N/mm environ quand la quantité de polybutadiène greffé passe de 1 à 8 parts en poids environ, et diminue quand la quantité de méthacrylate de zinc augmente,
- la dureté passe de 60 à 75 Shore A environ quand la quantité de méthacrylate de zinc passe de 0 à 45 parts en poids et diminue légèrement quand la quantité de polybutadiène greffé augmente.

La composition préférée de l'élastomère selon l'invention, indiquée plus haut, permet d'obtenir le meilleur compromis entre ces caractéristiques, c'est-à-dire, une résistance à la rupture et une dureté maximales pour un allongement à la rupture et une résistance au déchirement ayant des valeurs supérieures à celles des élastomères comparables de la technique antérieure.

On a également constaté que l'élastomère selon l'invention a une meilleure tenue à chaud en ce qui concerne son module d'élasticité dynamique, qui reste sensiblement constant et augmente même légèrement quand la température passe de 60°C à 120°C, alors que ce module diminue notablement pour la même augmentation de température dans le cas des élastomères comparables de la technique antérieure.

La composition d'élastomère selon l'invention est bien entendu utilisable pour fabriquer d'autres produits que des courroies de transmission de puissance, dès lors que ces autres produits sont soumis à des charges dynamiques au cours de leur utilisation normale.

## Revendications

1. Composition d'élastomère à réticulation par des peroxydes organiques, comprenant essentiellement, avant réticulation, un EPDM, au moins une charge telle par exemple que du noir de carbone et un sel métallique d'un acide organique α,β-insaturé, **caractérisée en ce qu'**elle comprend un autre additif réagissant avec le sel métallique précité pour renforcer la réticulation de l'élastomère, cet autre additif étant formé essentiellement d'un élastomère greffé à l'anhydride maléique.

2. Composition selon la revendication 1, **caractérisée en ce qu'**elle comprend de 2 à 30 parts en poids environ dudit autre additif et de 2 à 50 parts en poids environ du sel métallique précité pour 100 parts en poids d'EPDM.

3. Composition selon la revendication 1 ou 2, **caractérisée en ce qu'**elle comprend environ de 3 à 5 parts en poids dudit autre additif et environ de 20 à 25 parts en poids du sel métallique précité pour 100 parts en poids d'EPDM.

4. Composition selon l'une des revendications précédentes, **caractérisée en ce que** le sel métallique précité est du méthacrylate de zinc, en particulier du mono-méthacrylate de zinc.

5. Composition selon l'une des revendications précédentes, **caractérisé en ce que** l'élastomère greffé à l'anhydride maléique est choisi parmi le polybutadiène, le polyisoprène, le polypropylène et un copolymère éthylène-acétate de vinyle.

6. Composition selon l'une des revendications précédentes, **caractérisée en ce que** l'élastomère greffé à l'anhydride maléique et le sel métallique précité sont sous forme de poudres.

7. Composition selon l'une des revendications précédentes, **caractérisée en ce qu'**elle comprend également un caoutchouc nitrile ou nitrile hydrogéné.

8. Composition selon une des revendications précédentes, **caractérisée en ce qu'**elle comprend également du polybutadiène.

9. Composition selon une des revendications précédentes, **caractérisée en ce qu'**elle comprend également du caoutchouc naturel.

10. Composition selon une des revendications précédentes, **caractérisée en ce qu'**elle comprend également un polyéthylène chlorosulfoné avec groupements alkyles.

11. Composition selon une des revendications précédentes, **caractérisée en ce qu'**elle comprend également des fibres de renforcement, telles que des fibres de polyamide, aramide, polyester, rayonne, coton, ou verre.

12. Courroie de transmission de puissance, **caractérisée en ce qu'**elle est réalisée essentiellement en un élastomère ayant la composition définie dans l'une des revendications précédentes.

## Patentansprüche

1. Elastomerzusammensetzung mit Vernetzung mittels organischer Peroxide, welche vor der Vernetzung im wesentlichen ein EPDM, mindestens einen Füllstoff wie beispielsweise Rußschwarz, und ein Metallsalz einer α,β-ungesättigten organischen Säure umfaßt, **dadurch gekennzeichnet, daß** sie einen weiteren Zusatz umfaßt, der mit dem genannten Metallsalz reagiert, um die Vernetzung des Elastomers zu verstärken, wobei dieser weitere Zusatz im wesentlichen aus einem mit Maleinsäureanhydrid gepfropften Elastomer besteht.

2. Zusammensetzung nach Anspruch 1, **dadurch gekennzeichnet, daß** sie ca. 2 bis 30 Gewichtsteile des weiteren Zusatzes und ca. 2 bis 50 Gewichtsteile des genannten Metallsalzes auf 100 Gewichtsteile EPDM umfaßt.

3. Zusammensetzung nach Anspruch 1 oder 2, **dadurch gekennzeichnet, daß** sie ca. 3 bis 5 Gewichtsteile des weiteren Zusatzes und ca. 20 bis 25 Gewichtsteile des genannten Metallsalzes auf 100 Gewichtsteile EPDM umfaßt.

4. Zusammensetzung nach einem der vorhergehenden Ansprüche, **dadurch gekennzeichnet, daß** das genannte Metallsalz Zinkmethacrylat, insbesondere Zinkmonomethacrylat ist.

5. Zusammensetzung nach einem der vorhergehenden Ansprüche, **dadurch gekennzeichnet, daß** das mit Maleinsäureanhydrid gepfropfte Elastomer aus Polybutadien, Polyisopren, Polypropylen und einem Ethylen-Vinylacetat-Copolymer ausgewählt ist.

6. Zusammensetzung nach einem der vorhergehenden Ansprüche, **dadurch gekennzeichnet, daß** das mit Maleinsäureanhydrid gepfropfte Elastomer und das genannte Metallsalz in Pulverform vorliegen.

7. Zusammensetzung nach einem der vorhergehenden Ansprüche, **dadurch gekennzeichnet, daß** sie des weiteren einen Nitrilkautschuk oder hydrierten Nitrilkautschuk umfaßt.

8. Zusammensetzung nach einem der vorhergehenden Ansprüche, **dadurch gekennzeichnet, daß** sie des weiteren Polybutadien umfaßt.

9. Zusammensetzung nach einem der vorhergehenden Ansprüche, **dadurch gekennzeichnet, daß** sie des weiteren Naturkautschuk umfaßt.

10. Zusammensetzung nach einem der vorhergehenden Ansprüche, **dadurch gekennzeichnet, daß** sie des weiteren ein chlorsulfoniertes Polyethylen mit Alkylgruppierungen umfaßt.

11. Zusammensetzung nach einem der vorhergehenden Ansprüche, **dadurch gekennzeichnet, daß** sie des weiteren Verstärkungsfasern wie etwa Polyamid-, Aramid-, Polyester-, Reyon-, Baumwoll- oder Glasfasern umfaßt.

12. Kraftübertragungsriemen, **dadurch gekennzeichnet, daß** er im wesentlichen aus einem Elastomer mit der in einem der vorhergehenden Ansprüche definierten Zusammensetzung hergestellt ist.

## Claims

1. An elastomer composition for curing by organic peroxides, the composition essentially comprising, prior to curing, EPDM, at least one filler such as carbon black, for example, and a metallic salt of an α,β-unsaturated organic acid, the composition being **characterized in that** it comprises another additive which reacts with the above-specified metallic salt to enhance the curing of the elastomer, said other additive being essentially formed by an elastomer grafted with maleic anhydride.

2. A composition according to claim 1, **characterized in that** it comprises 2 to 30 parts by weight, approximately, of said other additive, and 2 to 50 parts by weight approximately of the above-mentioned metallic salt per 100 parts by weight of EPDM.

3. A composition according to claim 1 or 2, **characterized in that** it comprises about 3 to 5 parts by weight of said other additive, and about 20 to 25 parts by weight of the above-mentioned metallic salt per 100 parts by weight of EPDM.

4. A composition according to any preceding claim, **characterized in that** the above-mentioned metallic salt is zinc methacrylate, in particular zinc monomethacrylate.

5. A composition according to any preceding claim, **characterized in that** the elastomer grafted with maleic anhydride is selected from polybutadiene, polyisoprene, polypropylene, and an ethylene vinyl acetate copolymer.

6. A composition according to any preceding claim, **characterized in that** the elastomer grafted with maleic anhydride and the above-mentioned metallic salt are in the form of powders.

7. A composition according to any preceding claim, **characterized in that** it also comprises a nitrile rubber or a hydrogenated nitrile rubber.

8. A composition according to any preceding claim, **characterized in that** it also comprises polybutadiene.

9. A composition according to any preceding claim, **characterized in that** it also comprises natural rubber.

10. A composition according to any preceding claim, **characterized in that** it also comprises a chlorosulfonated polyethylene with alkyl groups.

11. A composition according to any preceding claim, **characterized in that** it also comprises reinforcing fibers, such as fibers of polyamide, aramid, polyester, rayon, cotton, or glass.

12. A power transmission belt **characterized in that** it is made essentially of an elastomer having the composition defined in any preceding claim.
